# EUROPEAN PATENT APPLICATION

(11) **EP 2 565 752 A2**
(43) Date of publication of application: **06.03.2013**
(21) Application number: 12182474.2
(22) Date of filing: 30.08.2012
(51) Int. Cl.: G06F 3/0354, G06F 3/0488

(54) **Method of providing a user interface in portable terminal and apparatus thereof**

(30) Priority: 31.08.2011 KR 20110087832; 16.07.2012 KR 20120077301
(71) Applicant: Samsung Electronics Co., Ltd., Suwon-si, Gyeonggi-do, 443-742 (KR)
(72) Inventor: Kim, Taeyeon, 443-742 Gyeonggi-do (KR); Park, Mijung, 443-742 Gyeonggi-do (KR); Yang, Guhyun, 443-742 Gyeonggi-do (KR)
(74) Representative: Harrison Goddard Foote

(57) **Abstract**

Provided are a method of providing a user interface of a portable terminal that may output an affordance image induced such that a certain function is performed in a location in which approach of a touch input device is sensed, and an apparatus thereof. The method of providing a user interface of a portable terminal with a touch screen, includes: checking whether approach of a touch input device is sensed on the touch screen; determining a type of the sensed touch input device when the approach of the touch input device is sensed; and outputting a first affordance image corresponding to at least one function executable using a stylus at a sensed region of the approach of a stylus when the touch input device is the stylus as the determination result.

## Description

### BACKGROUND OF THE INVENTION

### Field of the Invention

The present invention relates generally to a method of providing a user interface of a portable terminal, and an apparatus thereof More particularly, although not exclusively, the present invention relates to a method and an apparatus for providing a user interface for a touch input device (e.g. finger or stylus) when approach of the touch input device towards a touch screen of the portable terminal is sensed.

### Description of the Related Art

In recent years, with the significant development of information, communication and semiconductor technology, the availability and use of all types of portable terminals has rapidly increased. In particular, recent portable terminals have been developed that converge traditional portable terminal functions as well as functions that were previously not available on portable terminals. As a representative example of the portable terminal functions, a mobile communication terminal can provide various functions such as a TV watching function (e.g., mobile broadcasting such as Digital Multimedia Broadcasting (DMB) or Digital Video Broadcasting (DVB)), a music playing function (e.g., MPEG Audio Layer-3 (MP3)), a photographing function, and an Internet access function as well as a general communication function such as speech call or text/multimedia message transmission/reception.

As more and varied functions are provided, there is a need to enable the user to control the portable terminal rapidly and conveniently. Due to this need, portable terminals with a touch screen have recently been developed. The touch screen may sense contact of a touch input device such as a finger or a stylus to generate an output at a contacted location. For example, when a touch occurs on an electromagnetic induction touch screen, the capacitance of a touched point varies. When the variation of capacitance exceeds a preset threshold, it is determined that a touch event is occurring. Through an algorithm that receives a signal of the capacitance variation, the location of the touch event may be determined by the algorithm.

Typically, a conventional portable terminal provides the same user interface without discriminating between a finger or a stylus being used as the basis of a touch input scheme of a touch screen. Accordingly, there is a problem in that a function of a user interface provided on the touch screen, or an image of a corresponding function, may have an unnecessary complex configuration. For example, when a touch input is performed using a finger, unnecessary functions suitable only for a stylus having a small touch region may be displayed.

There is inconvenience in that the user of the conventional portable terminal needs to perform a plurality of touch operations, such as a first touch for displaying a function screen of a user interface and a second touch for executing a desired function on the function screen to execute the desired function.

### SUMMARY OF THE INVENTION

The present invention has been made in view of the above problems. It is an aim of certain embodiments and aspects of the present invention to address, solve, mitigate or obviate, at least partly, at least one of the problems and/or disadvantages associated with the prior art, such as those mentioned above. Certain embodiments and aspects aim to provide at least one of the advantages described below.

Accordingly, certain embodiments of the present invention provide a method and an apparatus of providing a user interface of a portable terminal that outputs an affordance image when approach of a touch input device (e.g. finger or stylus) towards a touch screen of the portable terminal is sensed. Certain embodiments of the present invention further provide a method of providing a user interface of a portable terminal that may output different affordance images according to types of input devices utilized on the portable terminal by the user. In certain exemplary embodiments of the present invention, an affordance image comprises an image (e.g. including one or more icons), which may be selected by a user by a touch input, in order to execute a function corresponding the affordance image.

In accordance with an aspect of the present invention, a method of providing a user interface of a portable terminal with a touch screen includes: checking whether approach of a touch input device towards the touch screen is sensed; determining a type of the sensed touch input device when the approach of the touch input device is sensed; and outputting a first affordance image corresponding to at least one function executable using a first type of touch input device (e.g. a stylus) at a sensed region of the approach of the stylus when the touch input device is the first type of touch input device as the determination result.

In accordance with another aspect of the present invention, an apparatus for providing a user interface of a portable terminal, includes: a touch panel for recognizing approach of a touch input device towards the touch panel, and for recognizing touch of the touch panel by the touch input device; a controller for determining a type of the sensed touch input device when the approach of the touch input device is sensed, and for controlling such that a first affordance image corresponding to at least one function executable using a first type of touch input device (e.g. a stylus) is displayed at a sensed region of the approach of the stylus when the touch input device is the first type of touch input device as the determination result; and a display panel for outputting the first affordance image.

In accordance with still another aspect of the present invention, a method of providing a user interface of a portable terminal with a touch screen includes: sensing approach of a first type of touch input device (e.g. a stylus) towards the touch screen; and outputting an affordance image corresponding to at least one function executable using the first type of touch input device at a sensed region of the approach of the first type touch input device when the approach of the first type of touch input device is sensed.

In accordance with yet another aspect of the present invention, an apparatus for providing a user interface of a portable terminal, includes: a touch screen for sensing approach of a first type of touch input device towards the touch screen; and a controller for controlling the touch screen to output an affordance image corresponding to at least one function executable using the first type of touch input device at a sensed region of the approach of the first type of touch input device when the approach of the first type of touch input device is sensed.

Another aspect of the present invention provides a computer program comprising instructions arranged, when executed, to implement a method, user interface, and/or apparatus in accordance with any of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

### BRIEF DESCRIPTION OF THE DRAWINGS

The above and other exemplary aspects, and features and advantages of certain exemplary embodiments of the present invention will be more apparent from the following detailed description in conjunction with the accompanying drawings, in which:
FIG. 1 is a block diagram illustrating an exemplary configuration of a portable terminal and a stylus according to an embodiment of the present invention;
FIG. 2 is a view illustrating an exemplary method of sensing approach of a touch input device according to an embodiment of the present invention;
FIG. 3 is a flowchart illustrating an exemplary method of providing a user interface of a portable terminal according to an embodiment of the present invention;
FIG. 4 is a view illustrating an exemplary screen for expressing an example of an interface providing an affordance image when a stylus approaches a schedule management screen according to an embodiment of the present invention;
FIG. 5 is a view illustrating an exemplary screen for expressing an example of an interface providing an affordance image when a stylus approaches a home screen according to an embodiment of the present invention; and
FIG. 6 is a view illustrating an exemplary screen for expressing an example of an interface providing an affordance image when a stylus approaches a screen of an address book.

### DETAILED DESCRIPTION OF EXEMPLARY EMBODIMENTS

Exemplary embodiments of the present invention are described with reference to the accompanying drawings in detail. This description is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the embodiments described herein can be made without departing from the scope of the invention.

The same or similar reference numbers are used throughout the drawings to refer to the same or like parts. Detailed descriptions of well-known functions, processes, constructions and structures incorporated herein may be omitted for clarity and conciseness, and to avoid obscuring appreciation of the present invention by a person of ordinary skill in the art with unnecessary detail of the well-known functions, processes, constructions and structures.

Also, the terms and words used herein are not limited to the bibliographical meanings, but are merely used by the inventor to enable a clear and consistent understanding of the invention. These terms and words are defined according to the functions of exemplary embodiments of the present invention as would be understood by a person of ordinary skill in the art. Thus, the terms may vary depending on user's or operator's intention and usage. That is, the terms used herein must be understood based on the descriptions made herein in view of the ordinary level of skill in the art. Accordingly, it should be apparent to those skilled in the art that the following description of exemplary embodiments of the present invention is provided for illustration purpose only and not for the purpose of limiting the invention as defined by the appended claims.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, it is to be understood that the singular forms "a," "an," and "the" include plural referents unless the context clearly dictates otherwise, and where the indefinite article is used, the specification is to be understood as contemplating plurality as well as singularity, unless the context requires otherwise. Thus, for example, reference to "an object" includes reference to one or more of such objects.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

As utilized in this detailed description, a portable terminal according to an embodiment of the present invention may be an electronic device with a touch screen, and may include a mobile communication terminal, a personal digital assistant (PDA), a smart phone, a tablet personal computer (PC), and a Portable Multimedia Player (PMP), although this description is not limited to only such terminals. One skilled in the will recognize that a portable terminal may include other portable electronic devices incorporating a touch screen with a processor for computing and/or communication.

In certain exemplary embodiments of the present invention, an affordance image comprises an image (e.g. including one or more icons), which may be selected by a user by a touch input, in order to execute a function corresponding the affordance image.

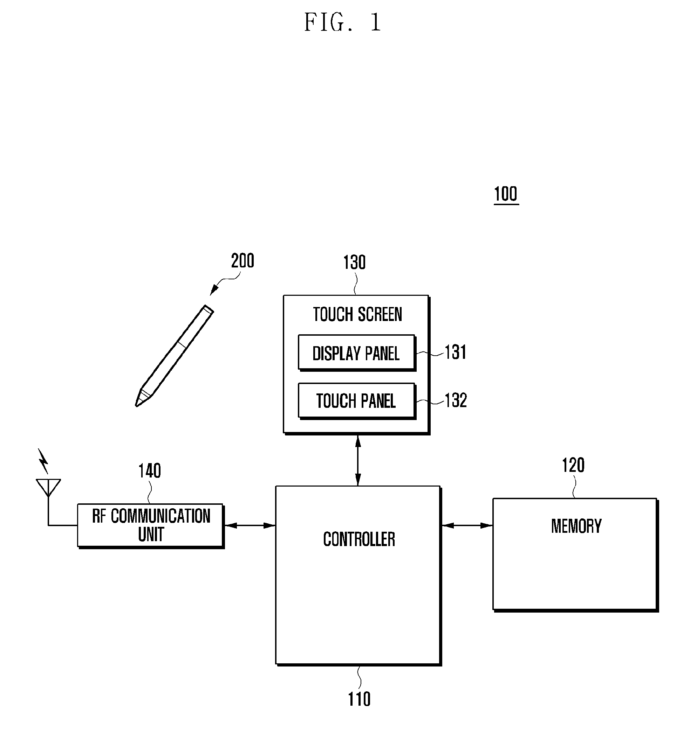

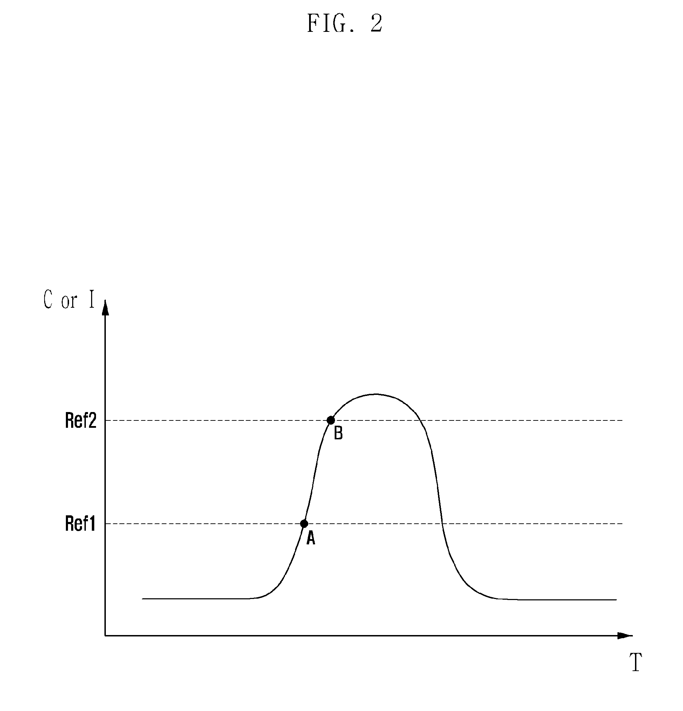

FIG. 1 is a block diagram illustrating a configuration of a portable terminal 100 and a touch input device 200 according to an exemplary embodiment of the present invention. In this exemplary embodiment, the touch input device 200 is a stylus, although other types of touch input device may be used. FIG. 2 is a view illustrating the variation of capacitance or electric current in a touch panel for implementing a method of sensing approach of a touch input device according to an embodiment of the present invention.

Referring to FIG. 1 and FIG. 2, a portable terminal 100 according to an embodiment of the present invention may include a radio frequency (RF) communication unit 140, a touch screen 130, a memory 120, and a controller 110. The touch screen 130 may include a display panel 131 and a touch panel 132.

The stylus 200 is a touch input device in the form of a pen, which may be used, for example, on an electromagnetic induction touch panel. To do this, the stylus 200 may include a resonance circuit. The resonance circuit may resonate by an electromagnetic field generated on the touch screen 130, and generate an induction current due to the resonance. The induction current generated by the resonance may cause current variation in the touch screen 130. That is, the touch screen 130 may recognize and react to the approach and touch of the stylus 200 through current variation due to the induction current. The design and construction of foregoing stylus 200 including a resonance circuit will be apparent to a person having ordinary skill in the art to which the invention pertains and is known in the art, and thus the detailed description thereof is omitted.

The RF communication unit 140 may form a communication channel for calls (voice and image calls) with a base station and a data communication channel for data transmission. To do this, the RF communication unit 110 may include a transmitter (not shown) for up-converting a frequency of a transmitted signal and amplifying the signal, a receiver (not shown) for low-noise-amplifying a received signal and down-converting the signal, and a transmission/reception separator (not shown) for separating the received signal from the transmitted signal.

The touch screen 130 may perform an input function and an output function. To do this, the touch screen 130 may include a display panel 131 for performing an output function and a touch panel 132 for performing an input function. The touch panel 132 may be configured as a combination touch panel utilising a combination of an electromagnetic induction scheme and a capacitive scheme. Alternatively, the touch panel 132 may be configured as a combination touch panel utilising a combination of the electromagnetic induction scheme and a resistive scheme.

The touch panel 132 is provided in a front surface of the display panel 131, and generates a touch event according to a touch of the touch panel 132 by a touch input device, for example a user's finger or the stylus 200, and transfers the generated touch event to the controller 110. The touch panel 132 may recognize the touch through variation in a physical property (e.g., capacitance, electric current, etc.), and transfer the type of touch (e.g., tap, drag, flick, double touch, long touch, multi touch, etc.) and touched positional information to the controller 110. The foregoing touch panel 132 will be apparent to a person having ordinary skill in the art to which the invention pertains, and thus the detailed description thereof is omitted.

In particular, the touch panel 132 in certain embodiments of the present invention may sense approach, touch, approach release, and touch release of the touch input device. This will be described with reference to FIG. 2, which illustrates an example in which, when the touch input device approaches and contacts the touch panel 132, and then, when the contact is released, the capacitance C or an electric current I vary as illustrated in FIG. 2. Here, if the level of the capacitance C or the electric current I is equal to or greater than a first reference value A, the touch panel 132 recognizes approach of a touch input device (e.g., within a distance of approximately 1 ∼ 2 cm to the touch panel 132). If the level of the capacitance C or the electric current I is equal to or greater than a second reference value B, the touch panel 132 may recognize that a touch input device contacts (touches) the touch panel 132.

The variation in the capacitance C and the electric current I has been described using the same exemplary graph of FIG. 2. It will be apparent to those skilled in the art that a variation graph of the capacitance C and a variation graph of the electric current I may have the same or similar form, but may not be perfectly identical with that illustrated in FIG. 2.

In this case, when the touch panel 132 is a combination touch panel including a capacitive touch panel and an electromagnetic induction touch panel, the capacitive touch panel may sense the approach contact (touch) and contact (touch) release of a finger, and the electromagnetic induction touch panel may sense the approach, contact (touch), and contact (touch) release of the stylus 200.

In accordance with certain exemplary embodiments of the present invention, so as to output an affordance image only when approach of the stylus 200 is sensed, the touch panel 132 may be a combination touch panel in which an electromagnetic induction touch panel and a resistive touch panel are combined with each other.

The display panel 131 displays information input by the user or information provided to the user as well as various menus of the portable terminal 100. That is, the display panel 131 may provide various screens according to utilization of the portable terminal 100. For example, an idle screen (home screen), a menu screen, a message creation screen, a call screen, a schedule management screen, and an address book screen. In particular, when approach of the touch input device is sensed, the display panel 131 of the present invention may output an affordance image under the control of the controller 110. This will be described in detail with reference to an example of a screen. The display panel 131 may be configured in the form of a flat panel display such as a Liquid Crystal Display (LCD), an Organic Light Emitted Diode (OLED), or an Active Matrix Organic Light Emitted Diode (AMOLED).

The memory 120 may store an Operating System (OS) of a portable terminal 100, and an application program necessary for enabling other options and functions. Other options and functions may include, for example, a voice playback function, an image or moving image playback function, a broadcasting playback function, a user data communication function. For example, the memory 120 may store a key map or a menu map for operating the touch screen 130. Here, the key map or the menu map may be configured in various forms, respectively. For example, the key map may become a key board map, a 3*4 key map, a QWERTY key map, or a control key map for controlling operation of a currently activated application program. Furthermore, the menu map may become a menu map for controlling an operation of a currently activated application program. The memory 120 may store character messages, game files, music files, movie files, and contact information.

Particularly, in an embodiment of the present invention, the memory 120 may store a program for outputting an affordance image when a touch input device approaches the touch panel. The affordance image that is output may be changed according to a type of the approached item, or a type of the touch input device.

For example, when the stylus 200 approaches a certain schedule of a schedule management screen, the affordance image that is output may be in the form of a "time change" image to which a "time change" function of a schedule is set. In other words, the "time change" image represents a "time change" function, such that the user may execute the "time change" function by touching or otherwise selecting the "time change" image. When the stylus 200 approaches a certain icon of a home screen, the affordance image may be in the form of a "moving" affordance image to which a "moving" function of an icon is set. When the stylus 200 approaches certain contact information of an address book screen, the affordance image may be in the form of a "function" affordance image including icons corresponding to frequently used functions, such as a call icon, a character icon, an e-mail icon, and an instant message icon.

Alternately, if a finger approaches a certain schedule of the schedule management screen, the affordance image that is output may be in the form of a "delete" affordance image to which a "schedule delete" function is set. When a finger approaches a certain icon of the home screen, the affordance image may be in the form of a "copy" affordance image to which an "icon copy" function is set. When the finger approaches certain contact information of the address book screen, an affordance image may not be output.

However, the skilled person will appreciate that the above describes one exemplary embodiment, but does not limit the present invention. That is, a function set to an affordance image that is output upon an approach of the touch input device towards the touch panel for any particular application may be variously changed according to the intention of a designer.

The memory 120 may store a program for setting an affordance display mode to be ON or OFF, for selectively displaying the affordance image, and may store a program for changing a function set to an affordance image. That is, if the touch input device approaches when the user has activated an affordance image display mode (ON), then the program may output an affordance image. On the other hand, if the touch input device approaches when the user has deactivated the affordance image display mode (OFF), then the program may not output an affordance image. Moreover, the program may change a function set to an affordance image to a function requested by the user.

The controller 110 may control an overall operation of the portable terminal 100 and signal flow between internal blocks of the portable terminal 100, and perform a data processing function for processing data. Particularly, when approach of the touch input device is sensed, the controller 110 in an embodiment of the present invention outputs a preset affordance image. When a touch event occurs on the affordance image, the controller 110 may control the respective structural elements such that a function set to the affordance image is performed. In this case, the controller 110 may output a different affordance image according a type of a touch input device (e.g., finger or stylus 200) approaching the touch screen 130. The controller 110 will be described in detailed with reference to FIG. 2 to FIG. 6.

In certain exemplary embodiments, the portable terminal 100 may include structural elements for providing additional functions such as a camera module for taking images or moving images, a transmitting/receiving module for receiving or broadcasting data or voice communications, a digital sound source playback module such as an MP3 module, a near distance wireless communication module such as a Bluetooth transmitter, and a proximity sensor module for proximity sensing. The skilled person will appreciate that the structural elements provided may be changed according to the particular requirements of a particular digital device. Accordingly, the elements listed above are merely examples. However, the portable terminal 100 may include additional or alternative structural elements, or structural elements equivalent to the foregoing structural elements.

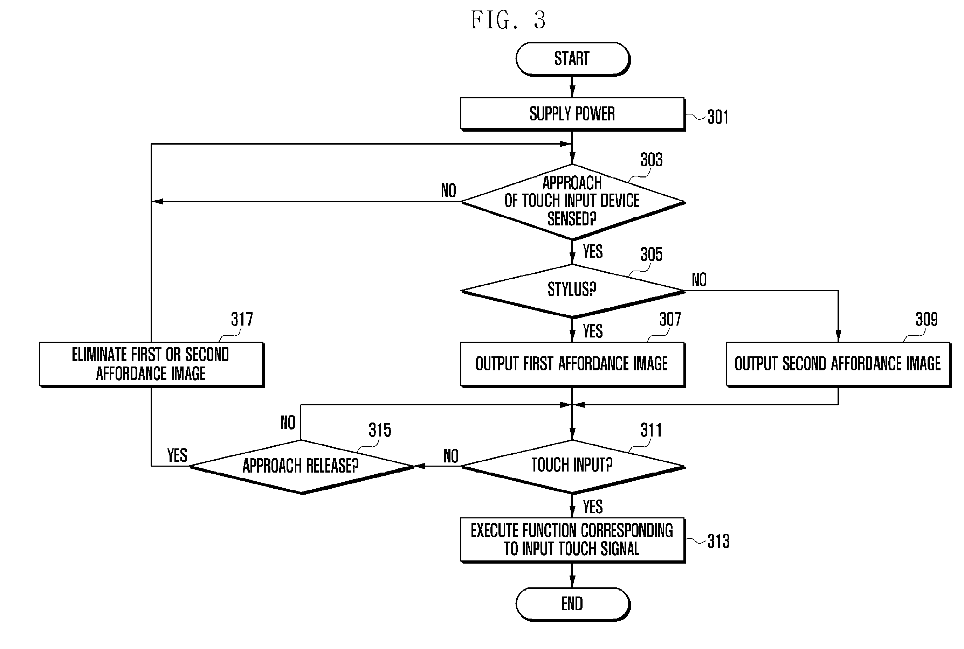

FIG. 3 is a flowchart illustrating a method of providing a user interface of a portable terminal according to an exemplary embodiment of the present invention. Hereinafter, a combination touch panel in which a capacitive touch panel and an electromagnetic induction touch panel are combined will be explained by way of example.

Referring to FIG. 1 to FIG. 3, a controller 110 of a portable terminal 100 according to an embodiment of the present invention may control power from a power supply that is supplied to respective structural elements of the portable terminal 100 (301). Next, the controller 110 may check whether approach of a touch input device (e.g., stylus 200, finger, etc.) is sensed (303). In detail, if the touch input device approaches a touch screen 130, a physical quantity such as capacitance or electric current varies. The touch panel 132 senses variation in the capacitance or the electric current and transfers the sensed variation to the controller 110. When the level of the capacitance or the electric current is equal to or greater than a first reference value, the controller 110 may determine that the touch input device is approaching a predetermined region of the touch screen 130. In this case, the controller 110 may output a location in which approach of the touch input device is sensed. If approach of the touch input device is not sensed, the controller 110 may repeat step 303 and continue to monitor for the approach of a touch input device. Conversely, if the approach of the touch input device is sensed, the controller 110 may determine a type of the touch input device whose approach is sensed (305). For example, the controller 110 may determine whether the sensed touch input device is a stylus 200 or a finger. Determination of a type of the touch input device may use various known technologies. To do this, when approach is sensed in a capacitive touch panel, the controller 110 determines that a finger is approaching. When approach of an electromagnetic induction touch panel is sensed, the controller 110 may determine that the stylus 200 is approaching. However, the present invention is not limited to these examples. That is, embodiments of the present invention may use other various known techniques as a technology for determining a type of the touch input device.

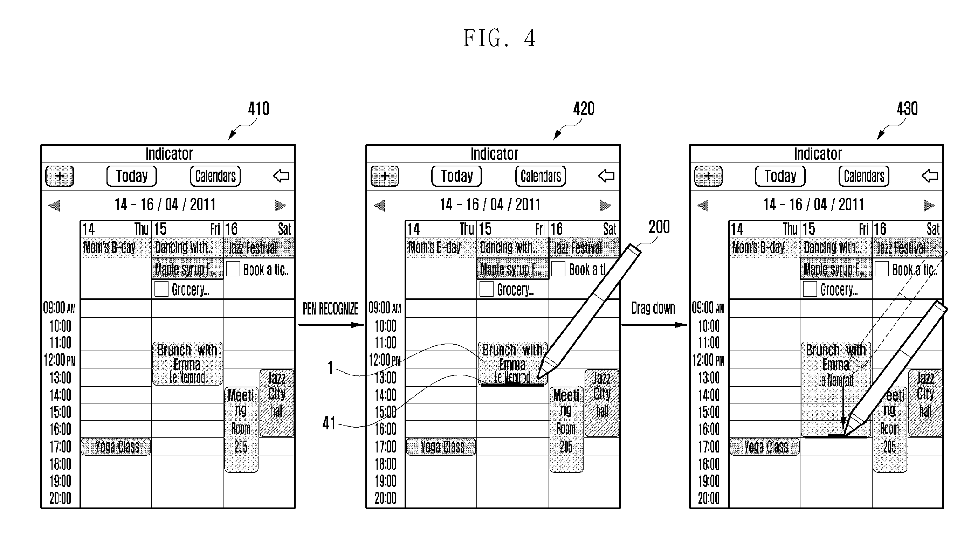

After reaching a determination result that the sensed touch input device is a first type of touch input device - in this example the stylus 200 - (for example, approach of the stylus 200 is sensed through electromagnetic induction touch panel), the controller 110 may output a first affordance image at a sensed location of the approach (307). The first affordance image may include, for example, at least one icon for allowing execution of a function by a user (e.g. a function for which a precise touch is required) using the stylus 200. This will be described in detail with reference to FIG. 4 to FIG. 6.

Conversely, when the sensed touch input device is not the stylus 200 (for example, when approach of a touch input device distinguished from said stylus (e.g. the user's finger) is sensed through a capacitive touch panel), the controller 110 may output a second affordance image distinguished from the first affordance image (309). The second affordance image may include, for example, at least one icon for allowing execution of a function by the user that does not require precise handling or touch (i.e. that does not require the stylus 200).

Next, the controller 110 may determine whether a touch input signal is generated (311). To do this, the controller 110 may check whether the level of the capacitance or electric current is greater than the second reference value to determine a touch. In this case, after performing step 307, in step 311 it is determined whether a touch event occurs within an image display region or in another region. After performing step 309 or 307, in step 311 it is determined whether a touch event occurs within a second affordance image display region or another region.

If the touch input signal is not generated, the controller 110 may determine whether a signal corresponding to an approach release of the touch input device (e.g. the touch input device moves away from the touch panel) is input (315). When the signal corresponding to the approach release of the touch input device is input, the controller 110 eliminates the first affordance image or the second affordance image (317), and the process returns to step 303, and the forgoing procedure may repeat iteratively in accordance with the application or function being accessed by the user.

Conversely, when the touch input signal is generated, the controller 110 may control such that a function corresponding to a touch signal input is performed (313). For example, when a touch event occurs on the first affordance image, the controller 110 may execute a function set to the first affordance image. When a touch event occurs on the second affordance image, the controller 110 may execute a function set to the second affordance image. When a touch event occurs on another region (e.g., other item), the controller 110 executes another function set to the other item. If the function corresponding to the input touch signal is terminated, the process returns to step 303 and the controller 110 may repeat the foregoing procedures.

In a state in which approach of the touch input device is sensed so as to output the first affordance image or the second affordance image, but touch of the touch screen 130 is not sensed, and when movement of the touch input device is sensed, the controller 110 may control such that the first affordance image or the second affordance image is moved according to movement of the touch input device.

Further, when the touch input device is moved, the affordance image may be changed according to an attribute of an item existing in a location in which approach of the touch input device is sensed. For example, when approach of the touch input device is sensed on a music file item, an affordance image including a function (playback, stop, addition in a playback file list) is outputted. When the touch input device is moved onto a shortcut item with respect to a contact point of an individual user, the controller 110 may output an affordance image including a function (call, character message, e-mail, etc.) associated with the contact point.

Further, the foregoing embodiment has illustrated that the controller 110 controls such that the second affordance image is output when a touch input device approaching the touch screen 130 is not the stylus 200, for example, when approach of a finger is sensed through a capacitive type touch panel. However, another embodiment of the present invention may process such that approach of a touch input device, other than the stylus 200, is disregarded. For example, when a touch input device, other than the stylus 200, approaches, the controller 110 may control such that no affordance image is outputted. That is, in another embodiment of the present invention, only when approach of the stylus 200 is sensed, the controller 110 may control such that a preset affordance image may be output. When the affordance image is output only where approach of the stylus 200 is sensed, the touch panel 132 may be configured as a combination touch panel being a combination of an electromagnetic induction type touch panel for sensing approach of the stylus 200 and a touch panel of various schemes (e.g., capacitive type, resistive type) capable of sensing a touch of a finger. The touch input device distinguished from said stylus may include touch gloves, capacitive stylus, and conductive stylus, etc.

The present invention may further include a step of determining whether an affordance image display mode is activated after step 301 or step 303. To reach the determination result, when the affordance image display mode is activated, the controller 110 performs following procedures. When the affordance image display mode is not activated, the controller 110 may sense only a touch event generated on the touch screen 130, and perform a function according to the sensed touch event.

FIG. 4 is a view illustrating an example of a screen for expressing an example of an interface providing an affordance image when a stylus approaches a schedule management screen according to an embodiment of the present invention.

Referring to FIG. 1 to FIG. 4, a display panel 131 according to an embodiment of the present invention may be utilized such that a schedule management screen is displayed. As illustrated in an example of a screen of reference numeral 410, the user may display a plurality of registered schedules to be divided into dates and times.

If approach of the stylus 200 is sensed in a displayed location of a meal schedule 1, the controller 110 may control the display panel 131 to output a time change affordance image 41 in the form of "-" capable of adjusting a due of the meal schedule 1 as illustrated in an example of a screen of reference numeral 420. The time change affordance image 41 is not limited to be displayed in the form of "-". That is, the time change affordance image 41 may be expressed in various forms according to intention of a designer.

To change a time of the meal schedule 1 in an output state of the time change affordance image 41, as illustrated in an example of a screen of reference numeral 430, the user may touch the time change affordance image 41 by the stylus 200, and move the touch (e.g., drag) to change an end time of the meal schedule 1. Conversely, when a touch is sensed on a region other than a time change affordance image 41 among a display region of the meal schedule 1, the controller 110 may control such that a corresponding function (e.g., view of detailed specification) is performed.

Meanwhile, the foregoing embodiment has illustrated that the controller 110 controls such that a time change function is performed when the time change affordance image 41 is touched. Furthermore, it has illustrated that when the region that the time change affordance image 41 is not outputted among a display region of the meal schedule 1 is touched, the controller 110 controls such that a function (output of details) corresponding to selection of the meal schedule 1 is performed. However, the present invention is not limited thereto. For example, another embodiment of the present invention may set a region spaced apart from an edge of the display region of the meal schedule 1 by a predetermined distance as a first virtual region of a display region of a meal schedule 1 and set a region except for the first virtual region included in the display region of the meal schedule 1 as second virtual region. When it is determined that a stylus 200 approaches the first virtual region, the controller 110 may control such that a time change affordance image 41 indicating that a time may be changed is displayed. When the stylus 200 approaches the second virtual region, the controller 110 may control such that a selection affordance image indicating that the meal schedule 1 may be selected is displayed or display of the affordance image is omitted.

When approach of the stylus 200 is sensed, the present invention mentioned above may display a time change affordance image 41 at one side of the display region of the meal schedule 1 to easily change a time period of the meal schedule. However, the related art needs to change a due date of a schedule through a plurality of steps. For example, the related art may require a long-touch of the schedule to activate a time change mode, and changes, when the time change mode is activated, a due date of the schedule through an additional touch input. Further, the related art may require a touch of the schedule to output a detailed report and change a due date of the schedule on a detailed report screen. That is, embodiments of the present invention allow a due date of the schedule to be changed rapidly, easily, and conveniently as compared with the related art.

In the meantime, FIG. 4 illustrates that only a time change affordance image capable of changing an end time of a schedule is displayed. However, the present invention is not limited thereto. That is, for example, the controller 110 may further output a time change affordance image capable of changing a start time, a start date, and an end date when approach of the stylus 200 is sensed.

Further, although not shown in FIG. 4, when approach of a touch input device (e.g., finger) other than the stylus 200 is sensed, the controller 110 may disregard sensing of the approach. That is, when a touch input device (e.g., finger) other than the stylus 200 is approached, the controller 110 may control such that no affordance image is outputted. This reason is because it may be difficult to touch an affordance image having a relatively small size displayed on a side of a display region. In this case, the user may, for example, touch a schedule to confirm a detailed report or long-touch the schedule to active a predetermined time change mode.

In another embodiment of the present invention, when approach of a touch input device (e.g., finger) other than the stylus 200 is sensed, the controller 110 may output another affordance image distinguished from an affordance image (e.g., time change affordance image) displayed when approach of the stylus 200 is sensed. For instance, the controller 110 may output an affordance image indicating that the schedule may be selected.

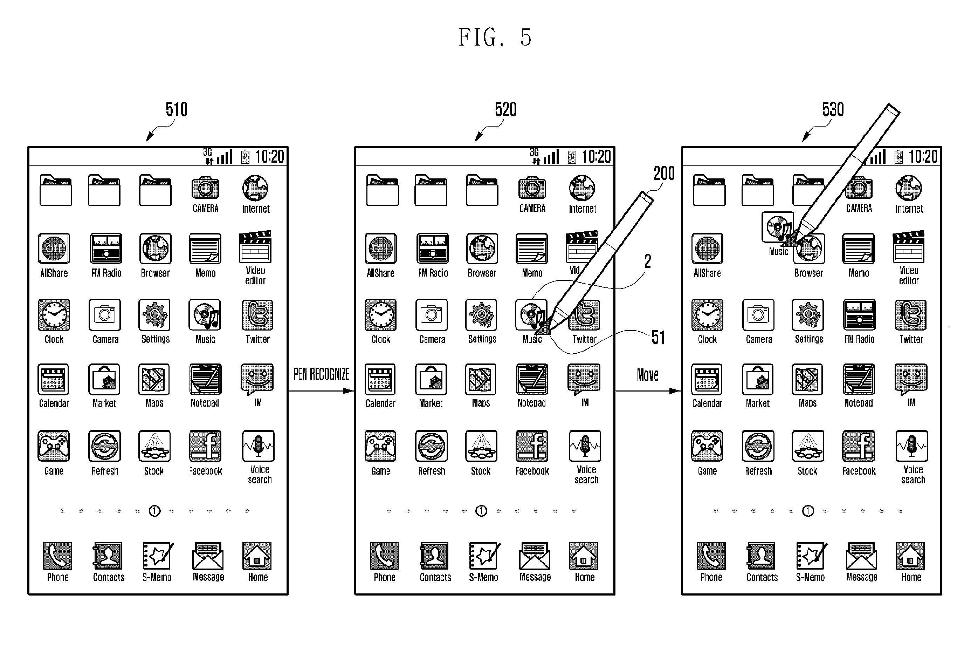

FIG. 5 is a view illustrating an example of a screen for expressing an example of an interface providing an affordance image when a stylus approaches a home screen according to an embodiment of the present invention.

Referring to FIG. 5, a controller 110 according to an embodiment of the present invention may control the display panel 131 to display a home screen. As illustrated in an example of a screen in reference numeral 510, a plurality of icons may be arranged and displayed in multiple-rows and multiple-columns.

If approach of the stylus 200 is sensed on the home screen, as illustrated in an example of a screen of reference numeral 520, the controller 110 may provide output of a moving affordance image 51 to which an icon moving function is set at one side of the music icon 2 which is approached by the stylus 200. FIG. 5 illustrates that the moving affordance image 51 has a form of "◢", and is displayed at a lower right end of the music icon 2. However, the present invention is not limited thereto and the moving affordance image may take any number of forms as determined by a designer. That is, a form and a display location of the moving affordance image 51 may be variously set.

In a state that the moving affordance image 51 is output at one side of the music icon 2, as illustrated in an example of a screen of reference numeral 530, the user may touch the moving affordance image 51 by a stylus 2 and moves the point of contact of the stylus and screen (e.g., drag) to change a location of the music icon 2. In the meantime, when a touch is sensed on a display region of the music icon 2, the controller 110 may control such that a music play function set to the music icon 2 is performed.

As described above, unlike the related art, embodiments of the present invention allow an icon to be easily moved without using a plurality of steps. In detail, the related art requires a long-touch of a music icon 2 to activate an icon moving function and moves the icon through a drag. However, when approach of the stylus 200 is sensed, in embodiments of the present invention, a touch and then a drag of a moving affordance image displayed on one side of an icon may be made to perform an icon moving function rapidly, easily, and conveniently.

Meanwhile, as illustrated in FIG. 4, the controller 110 classifies a display region of the music icon 2 into a first virtual region and a second virtual region. When approach of the stylus 200 is sensed on the first virtual region, the controller 110 may control such that a time change affordance image 41 displaying that the due data can be changed can be displayed. When approach of the stylus 200 is sensed on the second virtual region, the controller 110 may control such that a selection affordance image corresponding to selection is outputted or no image is outputted.

In the meantime, FIG. 5 illustrates that a location of an icon displayed on the home screen is changed. However, the present invention is not limited thereto. For example, when approach of the stylus 200 is sensed, the controller 110 may display a size change affordance image for changing the size of the icon. In the size change affordance image, a widget whose size is changed, such as a weather widget or a schedule widget, is applicable to a home screen.

Moreover, although not shown in FIG. 5, when approach of a touch input device (e.g., finger) is sensed, the controller 110 may disregard sensing of the approach. That is, when the approach of the touch input device (e.g., finger) is sensed, the controller 110 may control such that no affordance image is outputted. This reason is because it may be difficult to touch an affordance image having a relatively small size displayed on a side of a display region. In this case, the user may, for example, long-touch an icon to perform an icon moving function.

In another embodiment of the present invention, when approach of a touch input device (e.g., finger) other than the stylus 200 is sensed, the controller 110 may output another affordance image distinguished from an affordance image (e.g., moving affordance image) displayed when approach of the stylus 200 is sensed. For instance, the controller 110 may output an affordance image indicating that the music icon 2 may be selected.

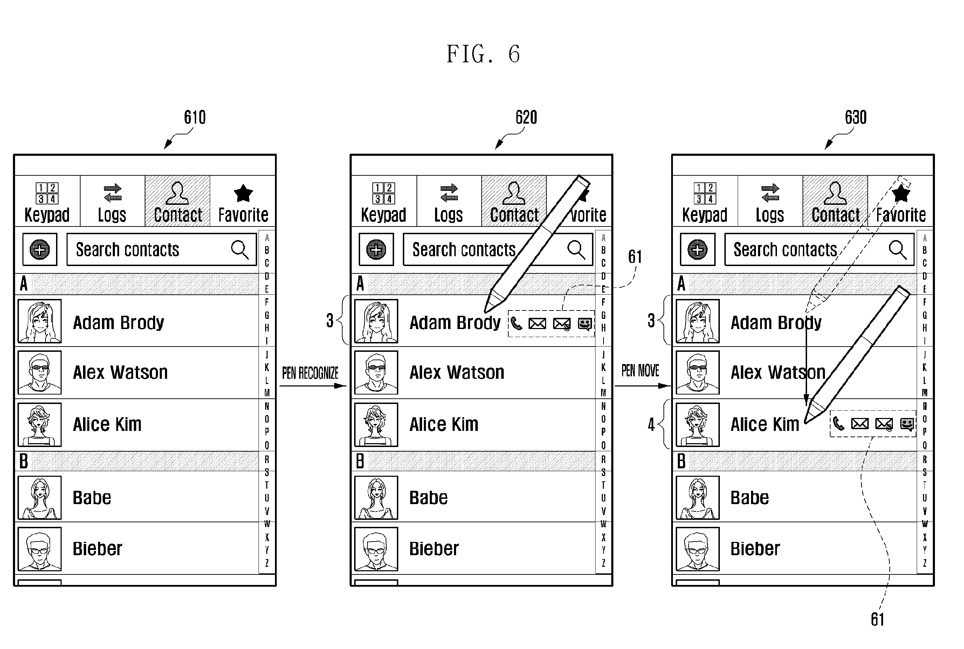

FIG. 6 is a view illustrating an example of a screen for expressing an example of an interface providing an affordance image when a stylus approaches a screen of an address book.

Referring to FIG. 6, a controller 110 according to an embodiment of the present invention may control a display panel 131 to display an address book screen. As illustrated in an example of a screen of reference numeral 610, the address book screen may display contact information registered in the portable terminal 100 in the form of a list.

If a stylus 200 approaches a first contact information field 3, as illustrated in an example of a screen of reference numeral 620, the controller 110 may provide control such that a function affordance image 61 is output to a side of the first contact information field 3. The function affordance image 61 may include icons indicating executable functions, for example, a call icon, a character icon, an e-mail icon, and an instant image icon using information (phone number, e-mail address, instant message ID, etc.) registered in corresponding contact information.

When the touch screen is in a state that the function affordance image 61 is output, the user may touch one of icons included in the function affordance image 61 by the stylus 200 to perform a corresponding function. For example, when the user touches a call icon, the controller 110 may request a call using a phone number of the corresponding contact information.

Meanwhile, when the user touches a region on which a function affordance image 61 is not displayed among display regions of the first contact information field 3, the controller 110 may output a detailed information screen of the first contact point.

In the meantime, when the user does not touch an icon included in a function affordance image 61, but moves the stylus 200 to another contact information field, the controller 110 may move the function affordance image 61 to another contact information field. For example, as illustrated in an example of a screen in reference numeral 630, when the user moves the stylus 200 to a second contact information field 4, the controller 110 may control such that the function affordance image 61 is displayed at a side of the second contact information field 4.

As described above, unlike the related art, embodiments of the present invention may easily allow a user to perform a certain function without using a plurality of steps. In detail, conventionally, after touching or long-touching a contact point field to output a function list in the form of a pop-up window, the user should select a desired function (character message, call, e-mail, etc.). However, when approach of the stylus 200 is sensed, embodiments of the present invention allow a user to touch one of icons included in a function affordance image displayed on one side of a contact point field to perform a desired function rapidly, easily, and conveniently.

In addition, although not shown in FIG. 6, when approach of a touch input device (e.g., finger) other than the stylus 200 is sensed, the controller 110 may disregard sensing the approach. That is, when the touch input device (e.g., finger) other than the stylus 200 is approached, the controller 110 may control such that no image is outputted. The reason is because it is difficult to touch an affordance image having a relatively small size displayed on one side of a display region of the icon using the finger. For example, when the user attempts touching a character message icon using the finger, the user firstly touches a call icon due to the finger having a relatively large size.

In the present invention mentioned above, when approach of the stylus 200 is sensed, an affordance image having a controlling function through a stylus with a small touch region, namely, a function for which a precise touch is requested is output. When approach of the stylus 200 is not sensed, that is, when approach of a finger is sensed, it may control a display panel 131 to output an affordance image including a function for which a precise touch is not requested. Accordingly, the present invention may output a suitable affordance image according to situations but not output unnecessary images on a screen to improve convenience for the user. When the touch approach other than touch sensing is sensed, the present invention may rapidly perform a desired function of the user according to output of an affordance image.

As illustrated above, in a method of providing a user interface of a portable terminal and an apparatus thereof according to embodiments of the present invention, when approach of a touch input device is sensed on a touch screen, an affordance image is output and one of icons included in the affordance image is touched to perform a desired function. Therefore, embodiments of the present invention may allow a user to rapidly perform a desired function without processing a plurality of steps. Further, embodiments of the present invention may output an affordance image corresponding to types of touch input devices. Accordingly, embodiments of the present invention may provide a suitable affordance image according to situations to enhance the convenience for the user.

The above-described methods according to the present invention can be implemented in the form of hardware, firmware or software, or any combination of hardware, firmware and software.

Any such software, for example in the form of computer code, may be stored in the form of volatile or non-volatile storage such as, for example, a storage device like a ROM, whether erasable or rewritable or not, or in the form of memory such as, for example, RAM, memory chips, device or integrated circuits, or on an optically or magnetically readable recording medium such as, for example, a CD (including CD ROM, CD-R and CD-RW), DVD (including DVD ROM, DVD-R and DVD-RW), a RAM, magnetic tape, magnetic disk (including a floppy disk and a hard disk), or a magneto-optical disk, or the like.

Any such software or computer code may be downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA.

As would be understood in the art, the computer, the processor, microprocessor controller or the programmable hardware include memory components, e.g., RAM, ROM, Flash, etc. that may store or receive software or computer code that when accessed and executed by the computer, processor or hardware, implement the processing methods described herein. In addition, it would be recognized that when a general purpose computer accesses code for implementing the processing shown herein, the execution of the code transforms the general purpose computer into a special purpose computer for executing the processing shown herein.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Although exemplary embodiments of the present invention have been described in detail hereinabove, it should be clearly understood that many variations and modifications of the inventive concepts herein taught which may appear to those skilled in the present art will still fall within the scope of the present invention, as defined in the appended claims.

## Claims

1. A method of providing a user interface of a portable terminal with a touch screen, the method comprising:
checking whether approach of a stylus is sensed on said touch screen; and
outputting a first affordance image corresponding to at least one function executable using a stylus at a sensed region of the approach of said stylus when the approach of said stylus is sensed.

2. The method of claim 1, further comprising
checking whether approach of a touch input device distinguished from said stylus is sensed on said touch screen; and
outputting a second affordance image corresponding to at least one other function executable using said touch input device distinguished from said stylus, wherein the at least one other function is different from the at least one function executable using said stylus, on a region which the approach of said touch input device distinguished from said stylus is sensed when the approach of said touch input device distinguished from said stylus is sensed.

3. The method of claim 1 or 2, wherein checking whether approach of said stylus is sensed comprises determining said stylus as the touch input device when approach of the touch input device is sensed through an electromagnetic induction type touch panel.

4. The method of claim 2, wherein checking whether approach of said touch input device distinguished from said stylus is sensed comprises determining said touch input device distinguished from said stylus as the touch input device when approach of the touch input device is sensed through a capacitive touch panel.

5. The method of claim 2 or 4, further comprising:
said first affordance image and said second affordance image comprise at least one function icon to which a certain function is set.

6. The method of claim 5, wherein the function icons included in said first affordance image and said second affordance image are changed according to a type of icon located at a region which said stylus or said touch input device distinguished from said stylus approaches.

7. The method of claim 5 or 6, further comprising moving said first affordance image or said second affordance image according to movement of said stylus or said touch input device distinguished from said stylus when the movement of said stylus or said touch input device distinguished from said stylus is sensed in a state that said stylus or said touch input device distinguished from said stylus approaches said touch screen.

8. An apparatus for providing a user interface of a portable terminal, the apparatus comprising:
a touch screen recognizing approach of a stylus; and
a controller controlling such that a first affordance image corresponding at least one function executable using a stylus at a side of a sensed region of approach of said stylus is displayed when the approach of said stylus is sensed.

9. The apparatus of claim 8, wherein said controller checks whether a touch input device distinguished from said stylus approaches said touch screen and outputs a second affordance image corresponding to at least one other function executable using said touch input device distinguished from said stylus, wherein the at least one other function is different from the at least one function executable using said stylus to a location in which the approach of said touch input device distinguished from said stylus is sensed.

10. The apparatus of claim 9, wherein said first affordance image and said second affordance image comprise at least one function icon to which a certain function is set.

11. The apparatus of claim 10, wherein said controller controls to display differently a function icon included in said first affordance image or said second affordance image according to a type of an item located in a region which said stylus or said touch input device distinguished from said stylus approaches.

12. The apparatus of claim 10 or 11, wherein said controller controls to move said first affordance image or said second affordance image according to movement of said stylus or said touch input device distinguished from said stylus when the movement of said stylus or said touch input device distinguished from said stylus is sensed in a state that said stylus or said touch input device distinguished from said stylus approaches said touch screen.

13. The apparatus of any of claims 8 to 12, wherein said touch screen comprises a combination touch panel being a combination of a capacitive touch panel and an electromagnetic induction touch panel.

14. The apparatus of claim 13, wherein said controller determines that said stylus approaches when said approach of the touch input device is sensed through said electromagnetic induction touch panel, and determines that said touch input device distinguished from said stylus approaches when the approach of the touch input device is sensed through said capacitive touch panel.

15. The apparatus of any of claims 8 to 14, wherein said touch screen comprises a combination touch panel being a combination of a resistive touch panel and an electromagnetic induction touch panel.
